# EUROPEAN PATENT APPLICATION

(11) **EP 2 067 540 A1**
(43) Date of publication of application: **10.06.2009**
(21) Application number: 07121846.5
(22) Date of filing: 29.11.2007
(51) Int. Cl.: B09C 1/00, C02F 3/00, C02F 101/32

(54) **Underground in situ bioremediation using site-specific microorganisms**

(71) Applicant: Cleanfield ApS, 2900 Hellerup (DK)
(72) Inventor: Permild, Erik, 2900, Hellerup (DK); Mogensen, Anders Skibsted, 2000, Frederiksberg (DK)
(74) Representative: Holme Patent A/S

(57) **Abstract**

The present invention relates to a method for the bioremediation of contaminated subsurface environments, wherein site-specific indigenous microorganisms are retrieved from the contaminated site, enriched ex situ, and subsequently re-introduced into the contaminated subsurface environment in situ.

## Description

The present invention relates to a method for the bioremediation of contaminated subsurface environments, wherein site-specific indigenous microorganisms are retrieved from the contaminated site, enriched ex situ, and subsequently re-introduced into the contaminated subsurface environment in situ.

In modern industrialized societies, contaminated subsurface environments are one of the major threats to human and environmental health. Toxic pollutants such as petroleum hydrocarbons, organic solvents, pesticides, or heavy metals put vital resources at stake. These resources are most frequently drinking water supplies, agricultural soils, and a healthy indoor climate.

Some of the most frequently encountered challenges in clean-up of contaminated subsurface environments are toxic, recalcitrant and/or persistent pollutants. Furthermore, physical access to subsurface contaminants is often complicated and costly, thus limiting the use of ex situ remediation efforts such as pump-and-treat or excavation technologies.

Consequently, the use of contaminant-degrading microorganisms for site clean-up, an approach known as bioremediation, has become increasingly popular. The last decades have seen the discovery of numerous microbial strains and consortia that are capable of degrading and de-toxifying groundwater contaminants. In this context, aerobic microbial metabolism, i.e. contaminant-breakdown catalyzed by oxygen-consuming microbes, often plays an important role.

A well-known approach of bioremediation is the addition of biostimulants such as carbon sources, electron acceptors or more complex nutritional mixtures and stimulants to the environment of interest. This measure is supposed to stimulate growth of the site-specific indigenous microflora, thereby ideally increasing rates of microbial contaminant degradation.

European Patent No. 625126 discloses a method for in situ remediation of contaminated subsurface soil or groundwater contaminated by chlorinated hydrocarbons. The method is based on supplying nutrients and oxygen to the subsurface and thereby stimulating microbial growth and degradation capabilities. Similarly, US Patent No. 6488850 discloses a method that comprises the supply of a butane substrate to a contaminated site for stimulating pollutant-degrading microorganisms.

The main disadvantage of these concepts is that a substantial amount of the added stimulant (e.g., nutrients, organic substrates) may not be utilized by the indigenous microflora due to insufficient cell numbers (especially at the beginning of the remediation effort). Consequently, the unused fraction of stimulant may undergo undesirable sorption- and redox-reactions with the subsurface sediment and/or organic matter leading to inefficiency and increasing costs. Furthermore, excess nitrogen- and/or phosphorous-containing nutrients may lead to water quality problems such as eutrophication of nearby surface waters.

Another well-known approach in bioremediation is the introduction of microorganisms capable of degrading one or more contaminants in the polluted subsurface. This is frequently combined with the above-mentioned nutritional amendments. The microorganisms at use are often highly specialized enriched microbial cultures and isolates that have previously demonstrated their degradative abilities. An example is the composition and method disclosed in European Patent No. 1352977. Here, novel microbial species of the Desulfitobacterium genus are presented that are capable of dehalogenating halogenated organics in the subsurface.

A major drawback of this approach is that microorganisms that perform well under defined laboratory conditions often perform poorly when subjected to site-specific environmental in situ conditions and indigenous microfloras. The main reason is that a stable microflora is often a well-balanced biocoenosis characterized by various interdependencies between different microbial species. Consequently, newly introduced strains that are not adapted to the well-balanced microecology of a given site may well face physico-chemical and/or ecological conditions that ultimately limit their performance and survival. This again will result in increased costs and prolonged time frames necessary for site clean-up.

US Patent No. 5221159 discloses a method for removing contaminants from soil and groundwater by extracting microorganisms natural to the contaminated site, isolating at least one microorganism capable of biodegrading the contaminants, fermenting the isolate(s), and finally re-introducing it/them into the subsurface. This invention overcomes the problems involved in introducing previously absent microorganisms to a contaminated site.

However, a problem in this respect is the isolation step that may lead to a poorly balanced microflora and ultimately to unsatisfactory degradation rates. Isolating one or more microbial species followed by producing the isolates in great cell numbers, and finally re-introducing the isolate(s) to their previously well-balanced biocoenosis may compromise the ecological balance of the microflora and, more importantly, potentially limits its biodegradative performance. Furthermore, microbiological isolation and purification techniques may be time-consuming and costly.

Japanese Patent No. 2004181314 discloses a method for the decomposition of soil contaminants by soil microorganisms that are present in the soil of interest. This method, however, is an ex situ approach that requires costly mechanical operations such as excavation, stirring, and mixing of soil material.

Hungarian Patent application No. 0500412 discloses a method for introducing a microbial consortium retrieved from the environment to be remediated to areas contaminated with halogenated hydrocarbons. However, this method targets anaerobic microorganisms.

Thus, it is a first aspect of the present invention to provide a bioremediation method that allows for in situ treatment of a contaminated site.

It is a second aspect of the present invention to provide a bioremediation method that allows for an efficient microbial uptake of bio-stimulants that are added to the subsurface.

It is a third aspect of the present invention to provide a bioremediation method that makes use of a simple and cost-effective ex-situ approach for enriching microbial biodegraders from the subsarface environment of interest.

It is a fourth aspect of the present invention to provide a bioremediation method that targets aerobic microbial biodegraders.

It is a fifth aspect of the present invention to provide a bioremediation method that makes use of the indigenous microflora present at the site of interest.

The new and unique way in which the current invention fulfils the above-mentioned aspects is a combination of three simple steps.

Firstly, a solid and/or aqueous sample from the contaminated subsurface environment is obtained by conventional sampling techniques.

Secondly, the subsurface sample is placed into a conventional, aerated chemostat together with a suitable medium. Typically, the residence time in the chemostat is around 24-36 hours.

Thirdly, the enriched microbial consortium is re-introduced into the contaminated environment.

This three-step procedure allows for the exploitation of the natural microbial degradation potential without having to introduce excess biostimulants into the subsurface. By means of growing and enriching the microbial population ex situ, under controlled laboratory conditions, the subsequent biostimulant demand decreases considerably. Introducing large amounts of biostimulants as the initial step of bioremediation thus becomes unnecessary since the initial biomass is already enriched and stimulated.

Furthermore, the said simple method for growing and enriching the indigenous microbial consortium of a given contaminated site redundantizes time-consuming and costly analysis, isolation, and purification of distinct microbial strains. The present method takes advantage of the fact that single microbial strains often function best in their original microbial consortium or biocoenosis.

Advantageously, adding oxygen in the form of atmospheric air or oxidizing agents such as hydrogen peroxide to the subsurface may accompany the presented method that makes use of aerobic microorganisms. Thereby, the increased oxygen demand of the enriched microbial consortium can be met and limitations to the biodegradation rate may be avoided.

Typically, the said method will involve the addition of a suitable biostimulant to the subsurface in order to maintain an active degrading microflora. This biostimulant traditionally comprises one or more dissolved nitrogen-, phosphorous- and/or potassium-containing compounds. These macronutrients are essential for microbial metabolism and cell growth. Furthermore, the addition of micronutrients such as trace minerals, vitamins and the like, is desirable to promote a viable microbial population.

One of the major advantages of the present invention is the fact the contaminant degradation by the action of the enriched microbial consortium takes place in situ and therefore does not require costly ex situ techniques such as excavation of soil or aquifer material.

The chemostat medium will typically be an aqueous medium with several nutritional amendments. These are nutrients such as dissolved nitrogen, phosphorous and/or potassium species and/or micronutrients such as trace minerals and/or vitamins. The latter may conveniently be purchased as commercially available domestic plant fertilizer. Another conceivable amendment to the medium could be another organic substrate as a carbon source.

Furthermore, the chemostat medium should contain at least one contaminant present in the contaminated subsurface environment of interest. Thereby it is ensured that contaminant-degrading and/or -tolerant microbial species are supported by the incubation conditions.

The chemostat is normally maintained at a temperature close to the in situ temperature of the contaminated subsurface environment of interest. This has the advantage of subjecting the microbial community to conditions that are very similar to their natural habitat. Thereby it is ensured that there will be no substantial loss in activity or degradative capacity upon re-introduction of the consortium into the subsurface.

The class of subsurface contaminants targeted by the present method will typically be organic compounds, for example, but not exclusively, petroleum hydrocarbons and/or organic solvents. These substances are typically readily biodegradable by the action of aerobic microorganisms. Microbial consortia, enrichment cultures or isolates that are capable of partly or completely oxidizing these substances have been discovered in numerous subsurface environments. The idea of exploiting this capacity of aerobic microbial metabolism is especially attractive since oxygen in the form of atmospheric air may be readily and cost-efficiently introduced into the subsurface.

There are several known techniques by which the enriched microbial culture may be re-introduced into the contaminated subsurface environment. Typically, one or more of the following techniques will accomplish this: lance injection, horizontal drilling, and/or well-injection. It is obvious for the person skilled in the art that the choice of the appropriate technique will depend on a number of parameters such as depth, accessibility, and the spatial spread of the contamination.

The invention will be explained in greater detail below where further advantageous properties and example embodiments are described with reference to the examples and drawings.

### Figures

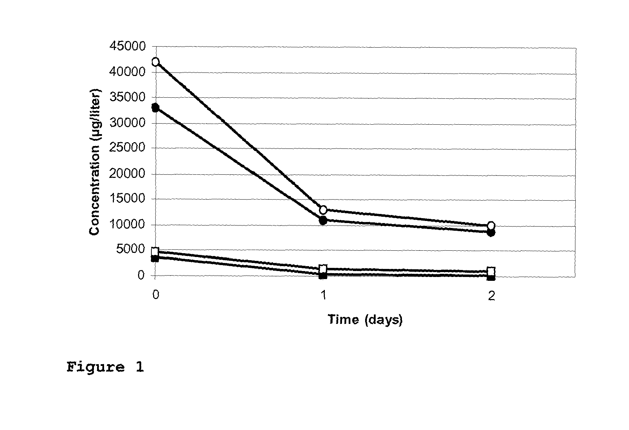

Fig. 1 shows a graph depicting hydrocarbon concentrations (ordinate) versus time (abscissa).

### Examples

### Example 1: Sampling and incubation of contaminated soil

A mass of approximately 2 kilograms of contaminated soil was sampled from a contaminated site. The soil was sampled at a depth of about 1.5 meters below surface. Soil sampling was performed according to the following published guidelines and recommendations,
- Grøn et al. (2003) Håndbog i prøvetagning af jord og grundvand, Nr.3, Amternes Videncenter for Jordforurening (AJV), Teknik og Administration (in Danish)
- Miljøstyrelsen (2003) Liste over kvalitetskriterier i relation til forurenet jord (opdateret 2005), som tillæg til Miljøstyrelsens Vejledning nr. 6 1998: Oprydning på forurenede lokaliteter (in Danish)
- Miljøstyrelsen (2000) Miljøprojekt 579. Udvikling af metode til testning af udvaskning af organiske stoffer fra jord og restprodukter (in Danish)

The obtained soil sample was analyzed for pentane-extractable hydrocarbons. The analysis showed that the sample contained approximately 8800 milligrams carbohydrates (fraction benzene-C35) per kilogram dry mass.

The soil sample was mixed with about 5 liters of tap water to produce a slurry. Tap water may contain the following constituents at their respective concentrations; 170 milligrams NaHCO₃ per liter, 50 milligrams MgCl₂ per liter, 210 milligrams CaCl₂ per liter; Di Gabriele & Scantlebury (2003) Corrosion Behaviour Of Magnesium Sacrificial Anodes In Tap Water, The Journal of Corrosion Science and Engineering, Vol 4, Preprint 4. Tap water may furthermore have a circumneutral pH value of around 7.

A subsample of about 0.5 kilograms of the afore-mentioned slurry was incubated in a chemostat at a temperature of 20°C. The incubation temperature may well be adjusted to the specific subsurface temperature of the given contaminated site. Also, the incubation temperature may be advantageously increased to temperatures above 20°C, such as for example 30°C or 37°C for increasing the rate of microbial growth.

A continuous inflow of tap water into the chemostat was established at a flow rate of around 15 to 20 milliliters per hour. A continuous outflow of the liquid phase within the chemostat was also established, roughly matching the inflow. A person skilled in the art will be able to adjust the flow rate according to the experimental conditions and requirements, such as the microbial growth rate.

Furthermore, the chemostat was aerated during operation for promoting growth of aerobic bacteria. Aeration was achieved by sparging of sterile pressurized air.

In a preferred embodiment of the present invention tap water is replaced by a nutrient medium containing essential growth factors necessary for microbial growth. A contemplated growth medium comprises proteose peptone, glycerol, K₂HPO₄, MgSO₄*7H₂O, agar, and distilled water. Other contemplated constituents of the medium include iron compounds, yeast extract, fatty acids, and tryptone. A person skilled in the art will easily be able to choose an appropriate medium based on the experimental requirements, for example based on which microbes or microbial groups are targeted. In one embodiment according to the current invention bacteria of the genus *Pseudomonas* are targeted. A useful overview of different media may be found in the "Handbook of Microbiological Media", 3rd edition, by Ronald M. Atlas (Author), Lawrence C. Parks (Editor), CRC Press, 2004.

In another contemplated embodiment according to the present invention one or more contaminants are added to the liquid phase that is used for preparing the slurry and for flowing into the chemostat. Advantageously, the said contaminants may be chosen in such a way as to match the predominant and/or relevant contaminants at the site that is to be remediated according to the present invention. The said contaminants may be organic compounds, for example one or more petroleum hydrocarbons.

According to a further embodiment of the present invention the equipment used in the laboratory and/or in the field, for example the chemostat, potential tubing, and a potential reservoir for the inflow solution, is sterilized prior to its use, for example by autoclaving.

In another contemplated embodiment of the present invention the content of the chemostat is stirred, for example by a magnetic stirrer.

A person skilled in the art will understand that the amounts, volumes, and masses referred to above may be adjusted according to case-specific conditions and requirements. The amount of soil slurry incubated in the chemostat may easily be increased by a factor of 10 or more. The flow rate of the liquid flowing into the chemostat may be increased accordingly.

An aqueous sample was taken from the chemostat every day starting at the first day of incubation. Fig. 1 shows aqueous concentrations of different hydrocarbons over time. In Fig. 1 closed squares indicate hydrocarbons of the benzene-C10 fraction, closed circles indicate hydrocarbons of the C10-C25 fraction, open squares indicate hydrocarbons of the C25-C35, and open circles indicate the sum of the three aforementioned hydrocarbon fractions. Aqueous phase concentrations in Fig. 1 are corrected for dilution effects by tap water flowing into the chemostat.

The data shown in Fig. 1 span a time interval of two days and demonstrate successful biodegradation of hydrocarbons on this time scale. The initial aqueous concentration of hydrocarbons was about 42000 micrograms per liter (sum of the three aforementioned hydrocarbon fractions). Within the shown time period of two days this concentration dropped to a final value of about 10000 micrograms per liter.

Furthermore, the microbial community present in the chemostat was analyzed. Slurry samples were taken after two full days of operation of the chemostat. The samples were incubated on Tryptic Soy Agar (TSA) and cetrimide agar at 20°C. Microbial colonies were identified by DNA-sequencing of 16S rDNA fragments. Obtained sequences were compared with known sequences saved in GenBank of the National Center for Biotechnology Information, U.S. National Library of Medicine, the Nucleotide Sequence Database of the European Molecular Biology Laboratory (EMBL), the DNA Database of Japan (DDBJ), and the Protein Data Bank (PDB) of the Research Collaboratory for Structural Bioinformatics (RCSB) using BLAST (Basic Local Alignment Search Tool of the National Center for Biotechnology Information, U.S. National Library of Medicine, 8600 Rockville Pike, Bethesda, MD 20894).

Table 1 shows the results from different colonies.

The incubated slurry and/or the aqueous outflow from the chemostat may be used for injection into the subsurface and subsequent bioremediation. Prior to injection the slurry and/or the aqueous outflow solution may be pre-treated, for example for removal of contaminants or other substances. Other contemplated pre-treatment steps include purification, concentration, enrichment and/or amendment with microbial growth factors.

**Table 1**

| Sample name | Result |
|---|---|
| Colony 1, TSA | 611 basepairs: 100% match with *Pseudomonas putida* J5 |
| Colony 2, TSA | 709 basepairs: 100% match with *Comamonas testosteroni* NCIMB 10643 |
| Colony 3, TSA | 654 basepairs: 100% match with *Pseudomonas lini* KNUC164, Ps. *Fluorescens* PC17 and Ps. *Mandelii* CIP 105273 |
| Colony 4, TSA | 704 basepairs: 100% match with *Delftia acidovorans* EEZ23 |
| Colony 5, cetrimide | 701 basepairs: 100% match with *Pseudomonas putida* ATCC 17642 |
| Colony 7, TSA | 464 basepairs: *Rhodococcus erythropolis* ATCC 55310 and *Rh. Boritolerans* BTM-6B |

## Claims

1. A method for cleaning contaminated subsurface environments, said method comprising the following steps,
- obtaining an inoculum by sampling the contaminated subsurface environment
- enriching microorganisms from this inoculum by using a suitable medium
- re-introducing the said enriched microbial culture into the contaminated subsurface environment.

2. The method according to claim 1 **characterized in, that** the medium is an aqueous medium.

3. The method according to claim 1 or 2 **characterized in, that** the medium comprised at least one nitrogen-containing, one phosphorous-containing, or one potassium-containing compound.

4. The method according to any one of claims 1-3 **characterized in, that** the medium comprises at least one contaminant present in the contaminated subsurface environment of interest.

5. The method according to any one of claims 1-4 **characterized in, that** one or more of the subsurface contaminants are organic compounds, e.g. petroleum hydrocarbons or organic solvents.

6. The method according to any one of claims 1-5 **characterized in, that** the enriched microorganisms are aerobic.

7. The method according to any one of claims 1-6 **characterized in, that** the enriched culture is re-introduced to the contaminated subsurface environment in situ.

8. The method according to any one of claims 1-7 **characterized in, that** the method further comprises adding hydrogenperoxid to the contaminated subsurface environment.

9. The method according to any one of claims 1-8 **characterized in, that** the method further comprises adding atmospheric air to the contaminated subsurface environment.

10. The method according to any one of claims 1-9
**characterized in, that** the method further comprises adding a nutrient solution containing at least one dissolved nitrogen-containing, one phosphorous-containing or one potassium-containing species to the said contaminated subsurface environment prior to, during, or after the said re-introduction of the enriched culture.

11. The method according to any one of claims 1-10
**characterized in, that** the re-introduction of said contaminated into the subsurface environment is accomplished by lance injection, horizontal drilling, and/or well-injection.

12. An enriched culture obtainable by the method according to any one of the claims 1-11

13. Use of the enriched culture according to claim 12, for removing organics from contaminated soil and/or water.
